# FASCICULE DE BREVET EUROPEEN

(11) **EP 2 307 948 B1**
(45) Date de publication et mention de la délivrance du brevet: **03.10.2012**
(21) Numéro de dépôt: 09784320.5
(22) Date de dépôt: 29.07.2009
(51) Int. Cl.: G06F 3/048

(54) **DISPOSITIF INTERACTIF ET PROCÉDÉ D'UTILISATION**
INTERAKTIVE VORRICHTUNG UND VERFAHREN ZU IHRER VERWENDUNG
INTERACTIVE DEVICE AND METHOD OF USE

(30) Priorité: 01.08.2008 FR 0804387
(43) Date de publication de la demande: 13.04.2011
(73) Titulaire: Tactimedia, 71100 Chalon-sur-Saône (FR)
(72) Inventeur: LETESSIER, Julien, F-38000 Grenoble (FR); MAISONNASSE, Jerôme, 38190 Champ-près-froges (FR); GOURIER, Nicolas, F-38000 Grenoble (FR); BORKOWSKI, Stanislaw, F-38700 La Tronche (FR)
(74) Mandataire: Gris, Sébastien
(86) Numéro de dépôt international: PCT/FR2009/000952
(87) Numéro de publication internationale: WO 2010/012905

(56) Documents cités:
- US-A1- 2003 085 871
- US-A1- 2006 036 944
- WILSON A D: "TouchLight: An imaging touch screen and display for gesture-based interaction" ICMI'04 - SIXTH INTERNATIONAL CONFERENCE ON MULTIMODAL INTERFACES - ICMI'04 - SIXTH INTERNATIONAL CONFERENCE ON MULTIMODAL INTERFACES 2004 ASSOCIATION FOR COMPUTING MACHINERY US, 2004, pages 69-76, XP002527403
- RAKKOLAINEN I: "Tracking users through a projection screen" PROCEEDINGS OF THE 14TH ANNUAL ACM INTERNATIONAL CONFERENCE ON MULTIMEDIA, MM 2006 - PROCEEDINGS OF THE 14TH ANNUAL ACM INTERNATIONAL CONFERENCE ON MULTIMEDIA, MM 2006 2006 ASSOCIATION FOR COMPUTING MACHINERY US, 2006, pages 101-104, XP002527404

## Description

### Domaine technique de l'invention

L'invention est relative à un dispositif interactif comportant des moyens de capture d'image, au moins un espace à interaction et des moyens de production d'un faisceau lumineux infrarouge orientés vers l'espace à interaction et comportant au moins une source lumineuse émettant dans l'infrarouge proche, lesdits moyens de capture comportant au moins deux caméras infrarouges couvrant ledit espace à interaction, lesdits moyens de capture étant reliés à un circuit de traitement, ledit dispositif comportant un panneau transparent délimitant, d'une part, l'espace à interaction inclus dans un environnement extérieur et, d'autre part, un espace interne dans lequel sont disposés la source lumineuse et les moyens de capture, lesdits moyens de capture comportant une caméra périphérique de capture dans le visible d'images représentatives de l'environnement extérieur.

### État de la technique

Le document US-A-2006/0036944 décrit un dispositif interactif, illustré à la figure 1, comportant au moins deux caméras infrarouges IR1 et IR2 orientées vers une face arrière d'un film transparent 1 interactif servant d'écran, sur lequel sont projetées des images par l'intermédiaire d'un vidéoprojecteur 2. Un usager peut interagir avec le film 1 interactif en le touchant ou en effectuant des mouvements à faible distance de ce film. Bien que le dispositif décrit puisse déterminer la position d'une main ou de doigts, si plusieurs doigts ou mains sont en contact avec le film 1, le dispositif n'est pas capable de déterminer si les doigts appartiennent à une même main ou si deux mains sont en contact avec la surface. Le dispositif n'est pas non plus capable de distinguer le contexte, c'est-à-dire de déterminer si ces deux mains appartiennent à un même usager ou à plusieurs usagers et d'adapter l'interaction à la distance de l'usager.

Le document US-A-2003/0085871 décrit un dispositif de pointage pour une surface interactive. Le dispositif comporte un écran muni à chacun de ses coins supérieurs opposés d'une caméra. Les caméras couvrent une surface d'affichage de l'écran, formant la surface interactive, et sont reliées à un processeur capable d'extrapoler, à partir d'images capturées par les caméras, le positionnement d'une main ou d'un stylo sur le plan formé par la surface interactive. La totalité de la surface interactive est éclairée par des diodes infrarouges situées près des caméras. Afin d'optimiser le fonctionnement du dispositif en plein jour, la zone correspondant à la surface d'affichage est entourée d'une bande réfléchissante des infrarouges. Bien que le dispositif puisse percevoir des mouvements d'une main au niveau de la surface interactive, dans le cas où des doigts de mains correspondant à plusieurs usagers sont en contact avec cette surface, le processeur n'est pas capable de déterminer si les doigts appartiennent à plusieurs usagers ou à une unique personne. Le dispositif n'est donc pas adapté à de grandes surfaces interactives destinées à être utilisée par une pluralité d'individus.

Le document WO2006136696 décrit une barre allongée comportant des diodes électroluminescentes ainsi que des caméras orientées de manière à couvrir un espace à interaction. Lors de l'utilisation d'une telle barre dans une vitrine, elle doit être disposée à l'extérieur de la vitrine, ce qui nécessite de faire un trou dans la vitrine pour relier la barre à des moyens de traitement informatique ou autre (alimentation, etc.). De plus, la barre, étant située à l'extérieur, peut facilement être dégradée par des vandales.

Aucun des dispositifs de l'art antérieur ne permet d'adapter l'interaction en fonction de la distance des individus et/ou du contexte visuel à proximité de la surface.

### Objet de l'invention

L'objet de l'invention a pour but de réaliser un dispositif facile à installer et pouvant être utilisé sur la voie ou dans un espace public par un ou plusieurs utilisateurs et ne risquant pas d'être dégradé ou volé.

Ce but est atteint par les revendications annexées et en particulier par le fait que le dispositif comporte au moins un élément de support portant ladite source lumineuse et/ou les caméras infrarouges et au moins un élément complémentaire en partie réfléchissant, l'élément de support et l'élément complémentaire étant séparés par le panneau transparent.

L'invention est aussi relative à un procédé d'utilisation du dispositif comportant un cycle répétitif comportant successivement :
- une étape d'acquisition d'images infrarouges par les caméras infrarouges et d'images dans le visible par la caméra périphérique,
- le traitement des images acquises,
- la fusion des images infrarouges et visibles pour générer une image représentative de l'environnement extérieur,
- le suivi des usagers situés dans l'environnement extérieur.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre un dispositif interactif selon l'art antérieur.
La figure 2 illustre un dispositif interactif selon un premier mode particulier de réalisation de l'invention.
Les figures 3 et 4 illustrent, respectivement en vue de face et en vue de dessus, un dispositif interactif selon un second mode particulier de réalisation de l'invention.
La figure 5 illustre, plus en détail, en vue de face, une barre de support utilisée dans le dispositif selon les figures 3 et 4.
La figure 6 représente une vue en coupe selon A-A du dispositif de la figure 4.
La figure 7 représente schématiquement un algorithme d'utilisation du dispositif selon l'invention.
Les figures 8 et 9 représentent plus en détail l'étape E4 de traitement des images de l'algorithme de la figure 7.
La figure 10 illustre plus en détail l'étape E19 de segmentation avant/arrière plan de la figure 9.
La figure 11 illustre un algorithme d'apprentissage de la segmentation avant arrière/plan.
La figure 12 illustre plus en détail l'étape E5 d'actimétrie de l'algorithme de la figure 7.

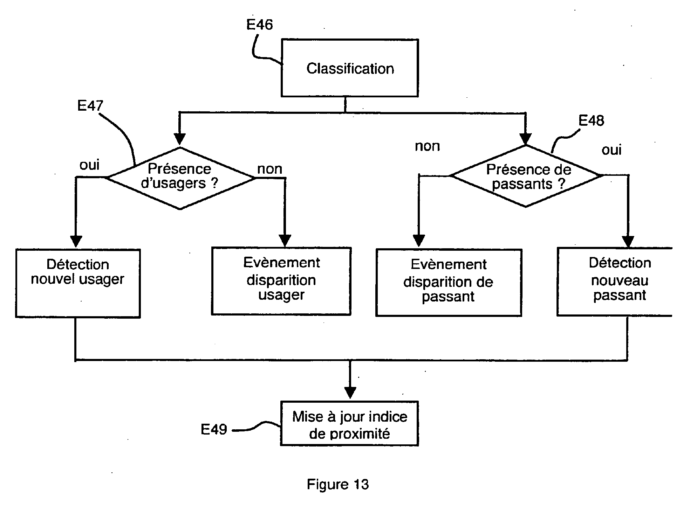

La figure 13 illustre plus en détail l'étape E7 de proximité de l'algorithme de la figure 7.

### Description de modes préférentiels de réalisation

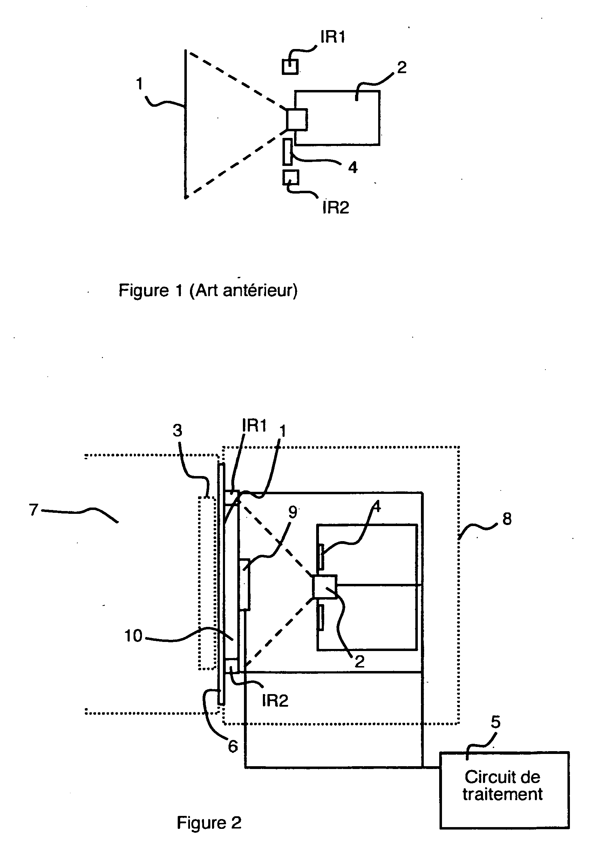

Selon un premier mode de réalisation illustré à la figure 2, le dispositif interactif comporte des moyens d'affichage constitués, par exemple, d'un film diffusant transparent 1 ou semi-transparent, servant d'écran d'affichage, et d'un vidéoprojecteur 2, orienté vers le film transparent 1 et permettant d'effectuer une projection arrière sur le film. Le dispositif interactif comporte au moins un espace à interaction 3 éclairé par des moyens de production d'un faisceau lumineux infrarouge orientés vers cet espace à interaction 3. On entend par espace à interaction un volume avec lequel un usager peut interagir. Les moyens de production du faisceau lumineux comportent au moins une source lumineuse 4 émettant dans l'infrarouge proche, par exemple dont les longueurs d'ondes sont comprises entre 800nm et 1000nm. Le dispositif interactif comporte aussi des moyens de capture d'images constitués par au moins deux caméras infrarouges IR1 et IR2. Chacune des caméras infrarouges est orientée vers l'espace à interaction 3, de manière à couvrir la totalité du volume correspondant à cet espace et à détecter des objets disposés dans cet espace. Les caméras infrarouges IR1 et IR2 sont reliées à un circuit 5 de traitement de l'information, lui-même relié au vidéoprojecteur pour, par exemple, modifier l'affichage lorsque les caméras infrarouges IR1 et IR2 détectent un mouvement d'un objet dans l'espace à interaction 3.

Comme illustré sur la figure 2, le dispositif interactif comporte, de plus, un panneau transparent 6 délimitant d'une part, l'espace à interaction 3 inclus dans un environnement extérieur 7 et, d'autre part un espace interne 8. Les moyens d'affichage (film transparent 1 et vidéoprojecteur 2), la source 4 de lumière infrarouge, et les moyens de capture formés par les caméras infrarouges, IR1 et IR2, et une caméra périphérique 9 sont tous disposés dans l'espace interne 8. La caméra périphérique 9 est destinée à la capture d'images dans le visible et orientée de manière à couvrir un volume représentatif de l'environnement extérieur 7 (en pointillé sur la figure 2), cette caméra périphérique 9 est elle aussi connectée aux moyens d'affichage. Le dispositif comporte en outre un élément de support 10 portant la source lumineuse et/ou les caméras infrarouges IR1, IR2. Cet élément de support 10 est destiné à être fixé à proximité du panneau transparent 6 dans l'espace interne 8. L'élément de support 10 est, de préférence, plaqué sur le panneau transparent 6. Cette configuration est rendue optimale par l'utilisation d'au moins un élément complémentaire 11 (non représenté à la figure 2) en partie réfléchissant, l'élément complémentaire 11 et l'élément de support 10 étant alors séparés par le panneau transparent 6. La partie réfléchissante de l'élément complémentaire permet d'orienter la source lumineuse 4 et/ou les caméras infrarouges IR1, IR2 de sorte à couvrir l'espace à interaction 3.

Le film transparent 1, disposé dans l'espace interne 8, est, de préférence, disposé à proximité immédiate du panneau transparent 6 ou encore directement collé dessus.

L'espace à interaction 3 définit un volume dans lequel l'utilisateur peut interagir avec l'affichage effectué par les moyens d'affichage. Il est ainsi possible à l'aide de ses mains, de ses doigts ou de tout objet tenu (un journal roulé par exemple) de modifier l'affichage comme il est possible de le faire sur un écran classique d'ordinateur à l'aide d'une souris. L'espace à interaction 3 sert ainsi d'interface utilisateur, les différents mouvements de l'utilisateur dans cet espace étant détectés par les caméras infrarouges IR1 et IR2, puis interprétés par le circuit de traitement 5 afin de retranscrire un retour utilisateur sur les moyens d'affichage en fonction du mouvement effectué. Ainsi, lorsqu'un usager se tient face à l'espace à interaction 3, à une distance d'interaction personnelle déterminée par réglage des caméras infrarouges en fonction de la profondeur de l'espace infrarouge, la position de ses mains, de ses doigts ou de l'objet qu'il tient est estimée par détection, lui permettant d'interagir avec l'espace à interaction 3 en étudiant les déplacements et/ou comportements de ses mains ou doigts.

Le vidéoprojecteur 2 du dispositif la figure 2 est, de préférence, équipé d'un filtre coupe bande dans l'infrarouge, limitant les perturbations des images capturées par les caméras infrarouges.

Il est préférable que le film transparent 1 et le panneau transparent 6 soient totalement transparents à la longueur d'onde du rayonnement infrarouge utilisé par la source lumineuse 4 et par les caméras IR1 et IR2.

La caméra périphérique 9 est, de préférence, placée à distance du panneau transparent 3 de sorte à couvrir un environnement extérieur assez large.

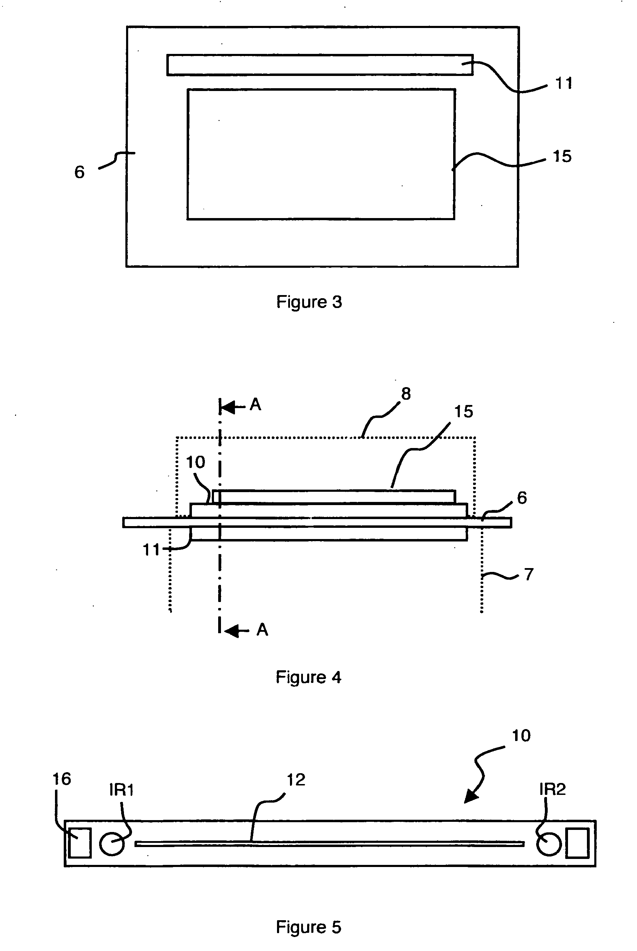

Dans un second mode de réalisation illustré aux figures 3 à 6, les moyens d'affichage comportent un écran opaque 15, placé dans l'espace interne 8. Un tel écran est, par exemple, un écran cathodique, LCD, plasma, etc. L'écran opaque peut impliquer des contraintes quant à la disposition, dans l'espace interne 8, des caméras infrarouges IR1 et IR2, et de la source lumineuse 4 émettant dans le proche infrarouge. Ainsi, il est avantageux que la source lumineuse 4 et/ou les caméras infrarouges IR1 et IR2 soient portées par au moins un élément de support 10 situé dans l'espace interne 8, par exemple au-dessus de l'écran opaque 15. Au moins un élément complémentaire 11, au moins en partie réfléchissant, est situé dans l'environnement extérieur 7. L'élément complémentaire 11 est destiné à réfléchir dans l'espace à interaction 3 les faisceaux lumineux infrarouges en provenance de la source lumineuse et à orienter le champ de vision des caméras infrarouges IR1 et IR2, de manière à assurer une couverture totale de l'espace à interaction 3.

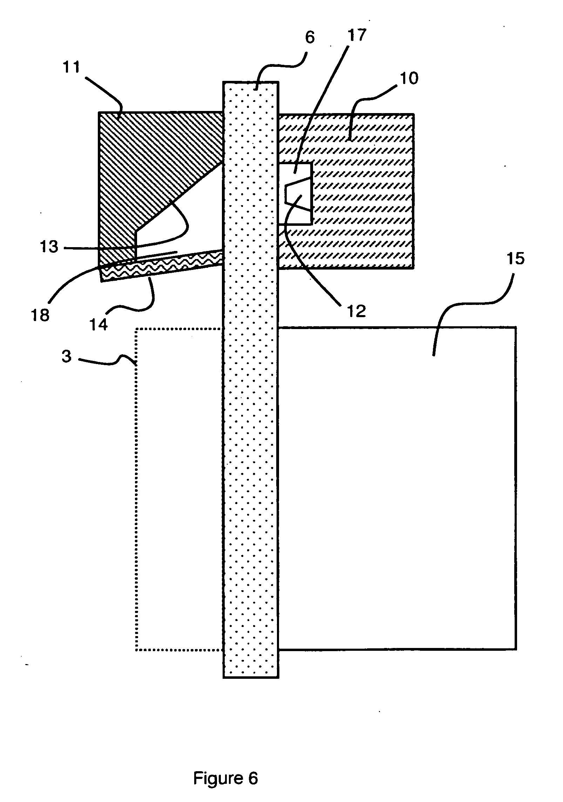

Comme illustré aux figures 4 et 6, l'élément de support 10 peut être constitué d'une barre de support destinée à être plaquée contre la face du panneau transparent 6 qui est orientée vers l'espace intérieur 8. La source lumineuse peut se présenter sous la forme d'un bandeau lumineux 12 constitué, par exemple, d'une pluralité de diodes électroluminescentes (LEDs). Le bandeau 12 est disposé le long de la face de la barre de support qui est plaquée contre le panneau transparent 6. Le bandeau 12 est, de préférence, placé au fond d'une cavité longitudinale ouverte 17 formée dans la barre de support. Ainsi, le bandeau 12 n'est pas disposé en saillie par rapport à la barre de support, ce qui empêcherait de plaquer la barre de support contre le panneau transparent 6. Les caméras infrarouges IR1 et IR2 sont, de préférence, logées dans la barre de support, à chaque extrémité du bandeau lumineux 12.

Comme illustré à la figure 6, l'élément complémentaire 11 peut se présenter sous la forme d'une barre complémentaire comportant une face inclinée 13, orientée à la fois vers le panneau transparent 6 (en direction du bandeau lumineux 12 et/ou les caméras infrarouges IR1 et IR2), ainsi que vers l'espace à interaction 3 lorsque la barre complémentaire est mise en place sur la face extérieure du panneau 6 orientée vers l'environnement extérieur 7. À titre d'exemple, sur la figure 6, le panneau 6 étant vertical, les éléments 10 et 11 disposés sur la partie supérieure du panneau et l'espace interne 8 situé sur la droite du panneau 6, la face 13 est inclinée vers le bas et fait un angle de l'ordre de 45° avec le panneau. La face inclinée 13 comporte des moyens de réflexion, par exemple une surface réfléchissante servant de miroir, pour propager la lumière infrarouge vers l'espace à interaction 3 et/ou orienter le champ de vision des caméras infrarouge IR1, IR2 dans cette même direction, de manière à couvrir tout l'espace à interaction 3.

La barre de support et la barre complémentaire peuvent être maintenues en regard de part et d'autre du panneau transparent 6 par l'intermédiaire d'aimants complémentaires (non représentés) situés, par exemple, à chaque extrémité de chaque barre, prenant en sandwich le panneau transparent 6 ou plus simplement par collage.

De préférence, la barre complémentaire comporte une plaque de protection 14, transparente aux rayonnements infrarouges considérés, fixée sur une face inférieure de la barre complémentaire. Ainsi lorsque, comme illustré à la figure 6, la barre de support 10 et la barre complémentaire 11 sont plaquées de part et d'autre du panneau transparent 6, et la plaque de protection 14 forme un renfoncement 18 délimité par la face inclinée 13 et une portion du panneau 6. Ainsi, aucun élément ne peut venir se loger dans ce renfoncement et perturber le bon fonctionnement du dispositif interactif. De plus, sans la plaque de protection 14 il serait nécessaire de nettoyer régulièrement la face inclinée 13, le nettoyage serait difficile en raison du positionnement de la face inclinée 13 dans le renfoncement, tandis que la plaque de protection 14 peut être nettoyée facilement par le passage d'un simple chiffon. De préférence, la plaque de protection 14 est inclinée de 15° par rapport à l'horizontale, cette inclinaison permet d'éliminer les réflexions parasites dans le champ de vision des caméras infrarouges IR1 et IR2.

L'utilisation de la barre complémentaire permet d'éviter de trouer le panneau transparent 6 pour laisser passer des fils reliés, par exemple, au circuit de traitement 5, les éléments électroniques étant situés dans l'espace interne 8.

À titre d'exemple, le panneau transparent 6 peut être constitué par une baie vitrée d'un local commercial, un plateau vitré d'une table, ou encore une vitre apposée sur le sol et derrière laquelle se trouve un caisson technique délimitant l'espace interne du dispositif.

Les réalisations décrites ci-dessus présentent l'avantage de protéger les éléments sensibles au vol et à la dégradation, tels que les caméras, l'écran, le vidéoprojecteur, etc. En effet, en les déportant dans l'espace interne, ceux-ci ne sont pas accessibles depuis un espace public.

De manière générale, la disposition précise des caméras infrarouges IR1 et IR2 et de la caméra périphérique 9 dans l'espace interne 8 a peu d'importance, tant que les caméras infrarouges sont orientées de manière à couvrir l'espace à interaction 3 et que la caméra périphérique couvre l'environnement extérieur 7. L'orientation des caméras infrarouges IR1, IR2 et/ou la source lumineuse 4 est réalisée par des moyens de réflexion pouvant être à base de miroirs formant la partie réfléchissante de l'élément complémentaire 11.

La caméra périphérique 9, détectant les rayonnements lumineux ayant une longueur d'onde dans le visible, permet d'obtenir une vision plus large et d'analyser l'environnement extérieur 7. La caméra périphérique 9 permet principalement de compléter et d'enrichir les données des caméras infrarouges. Ainsi, le circuit de traitement 5 peut reconstituer une scène tridimensionnelle correspondant à l'environnement extérieur 7. La scène tridimensionnelle reconstituée par le circuit de traitement 5 permet de distinguer si plusieurs usagers sont en train d'interagir avec l'espace à interaction 3 et de dissocier les différents mouvements de plusieurs usagers. Ces mouvements sont déterminés de manière précise par l'étude d'une succession d'images infrarouges. La dissociation des mouvements en fonction des usagers permet, par exemple, d'associer à un usager donné une zone de l'espace à interaction, correspondant alors à une zone des moyens d'affichage, le dispositif devenant alors multi-utilisateur.

Selon un perfectionnement, la caméra périphérique 9 permet de diviser l'environnement extérieur 7 en plusieurs sous-volumes, pour classer en différentes catégories les individus détectées par la caméra périphérique, en fonction de leur position dans l'environnement extérieur 7. Il est en particulier possible de distinguer les catégories suivantes d'individus : passant et usager. Un passant est un individu circulant devant le dispositif, à une certaine distance de celui-ci et ne paraissant pas intéressé ou un individu à proximité du dispositif interactif, c'est-à-dire capable de distinguer visuellement des éléments affichés par les moyens d'affichage ou des éléments placés derrière le panneau 6. Un usager est un individu ayant manifesté une volonté d'interagir avec le dispositif interactif à travers son comportement, par exemple en plaçant ses doigts dans l'espace à interaction 3.

À titre d'exemple, le volume peut être divisé en 4 sous volumes placés à une distance plus ou moins importante du panneau transparent 6, qui peut être constitué par une vitrine. Ainsi un premier volume, le plus éloigné du panneau transparent 6, correspond à une zone pour les passants éloignés. Si aucun individu n'est présent dans les volumes plus proches du panneau 6, des images d'ambiance sont affichées. Elles n'attirent pas spécialement l'attention des passants, trop éloignés, circulant devant le panneau. Un second volume, plus proche de la vitrine est associé à des passants proche. Le circuit de traitement 5 peut, lorsque la présence d'un passant proche est détectée dans ce second volume, changer l'affichage pour attirer l'oeil du passant ou encore, par exemple, diffuser un message par haut-parleur pour interpeller le passant. La présence d'un individu dans un troisième volume, encore plus proche du panneau transparent 6 que le second volume, conduit le circuit de traitement 5 à considérer que l'attention de l'individu a été captée et qu'il peut potentiellement interagir avec l'espace à interaction 3. Le circuit de traitement 5 peut alors modifier l'affichage pour amener l'individu à se rapprocher encore et devenir un usager. Un quatrième volume correspond à l'espace à interaction 3 précédemment défini. L'individu devient alors un usager, c'est-à-dire un individu ayant manifesté une volonté d'interagir avec l'écran à travers son comportement et dont les mains, les doigts ou un objet tenu se trouvent dans l'espace à interaction 3.

Grâce à la caméra périphérique 9, l'ensemble des éléments du dispositif peut proposer aux usagers une interaction riche et adaptée à leur contexte et le dispositif peut devenir multi-utilisateur tout en adaptant les services fournis à l'implication de l'individu dans l'interaction.

Selon un développement, le dispositif interactif ne comporte pas de moyens d'affichage. Il peut ainsi être utilisé dans une vitrine comportant, par exemple, des objets et l'espace à interaction 3 résultant correspond sensiblement à un volume disposé en regard de tous les objets. Les données sont acquises de manière similaire au dispositif comportant des moyens d'affichage et peuvent être analysées par le circuit de traitement afin d'apporter des informations au propriétaire de la vitrine fonctions de l'intérêt des individus aux différents produits présents dans la vitrine. Bien entendu, la vitrine peut aussi comporter un écran miniature permettant d'afficher des informations sur un objet de la vitrine lorsqu'un usager pointe l'objet concerné du doigt. Ce développement peut être utilisé avec les dispositifs, sans ou avec moyens d'affichage, décrits ci-dessus.

L'invention ne se limite pas aux modes de réalisation particuliers décrits ci-dessus, mais couvre plus généralement tout dispositif interactif comportant des moyens d'affichage ou non, des moyens de capture d'images, au moins un espace à interaction 3 et des moyens de production d'un faisceau lumineux infrarouge, orientés vers l'espace à interaction 3, et comportant au moins une source lumineuse 4 émettant dans l'infrarouge proche. Les moyens de capture comportent au moins deux caméras infrarouges IR1 et IR2 couvrant l'espace à interaction 3 et sont reliés à un circuit de traitement 5 connecté aux moyens d'affichage (si présent). Le panneau transparent 6 délimite d'une part l'espace à interaction 3 inclus dans l'environnement extérieur 7 et d'autre part l'espace interne 8 dans lequel sont disposés la source lumineuse 4, les moyens de capture et le cas échéant les moyens d'affichage. Les moyens de capture comportent, de plus, une caméra périphérique 9 de capture dans le visible d'images représentatives de l'environnement extérieur 7.

Le mode de réalisation à deux éléments et ses variantes peut être utilisé quelque soit le type de moyens d'affichage (écran ou film transparent) et même dans le cas où il n'y a pas de moyens d'affichage.

L'utilisation du dispositif comporte au moins les étapes suivantes :
- une étape d'acquisition d'images infrarouges E1, E2 par les caméras infrarouges IR1 et IR2 et d'images dans le visible E3 par la caméra périphérique 9,
- le traitement des images acquises,
- la fusion des images infrarouges et visibles pour générer une image représentative de l'environnement extérieur 7 incluant l'espace à interaction 3,
- le suivi d'individus situés dans l'environnement extérieur,
- et dans le cas où le dispositif comporte des moyens d'affichage la modification de l'affichage en fonction des mouvements d'individus, considérés comme des usagers, au niveau de l'espace à interaction 3 ou de l'environnement extérieur.

Le dispositif agissant en temps réel, ces étapes sont répétées cycliquement et sont traitées par le circuit de traitement.

Le traitement effectué par le circuit de traitement 5 sur les images en provenance des différentes caméras permet de piloter les réactions du dispositif au niveau de l'affichage par retour d'informations aux usagers.

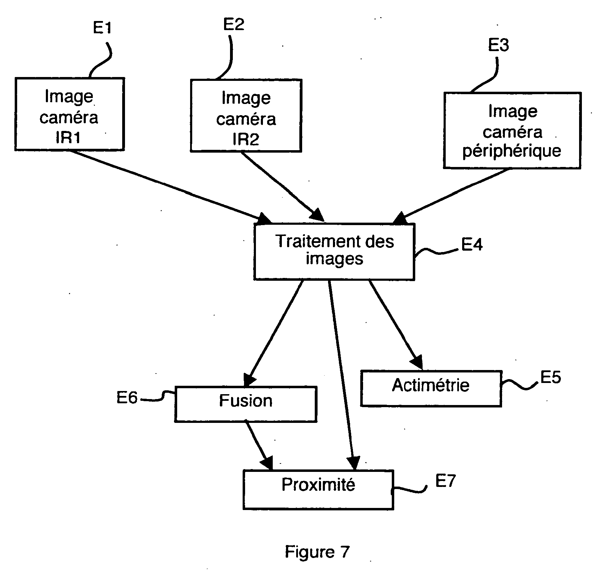

Ainsi, le circuit de traitement 5 analyse les images en provenance des caméras IR1, IR2 et 9 et pilote l'affichage en fonction du contexte de l'environnement extérieur. L'algorithme général, illustré à la figure 7, comporte, à un instant t donné, des étapes E1 et E2 d'acquisition d'images infrarouges, en provenance des caméras infrarouges IR1 et IR2, et une étape E3 d'acquisition d'une image dans le visible par la caméra périphérique 9. Les différentes images ainsi acquises sont ensuite traitées dans une étape E4 de traitement des images pour rectifier les images, puis déterminer la position des mains, des doigts, des individus, etc. à proximité de l'espace à interaction 3. À partir des résultats de l'étape de traitement des images, une étape d'actimétrie E5 détermine les différentes propriétés de chaque individu présent dans le champ de vision de la caméra périphérique 9. À titre d'exemple, les propriétés d'un individu sont son sexe, son âge et éventuellement sa catégorie socioprofessionnelle, déterminée par exemple en fonction de son apparence globale. Toujours à partir des résultats de l'étape E4 de traitement des images, une étape de fusion E6 des images infrarouges et des images de la caméra périphérique permet, par la combinaison des images des caméras infrarouges IR1 et IR2 et de la caméra périphérique 9, d'associer à un usager précis les mains, doigts et/ou objet lui appartenant et de suivre l'évolution des individus à proximité de l'écran en fonction de leur position précédente (à un instant t-1 par exemple). Des bases de données dans lesquelles sont stockées les informations précédentes sont mises à jour avec les nouvelles données ainsi obtenues. Après attribution des mains et doigts à l'usager correspondant, le circuit de traitement 5 est capable de réaliser le suivi des mouvements de l'usager en fonction des positions précédentes de ses mains et/ou doigts et de mettre à jour l'affichage en conséquence. En parallèle et/ou suite à l'étape de fusion E6, une étape de proximité E7 utilise le suivi des individus et la détection des doigts, mains ou objets pour calculer un indice de proximité de l'individu avec l'espace à interaction 3 et détecter un éventuel rapprochement, éloignement ou disparition d'un individu, représentatif de son intérêt pour l'affichage. L'indice de proximité est représentatif de sa position par rapport à l'espace à interaction 3 et est utilisé, par exemple, pour essayer d'attirer l'attention des individus en fonction de leur intérêt pour les contenus affichés ou pour détecter l'absence d'individus devant l'écran d'affichage et ainsi éviter de fausses détections d'usagers si aucun doigt/main/objet n'est présent dans l'espace à interaction 3.

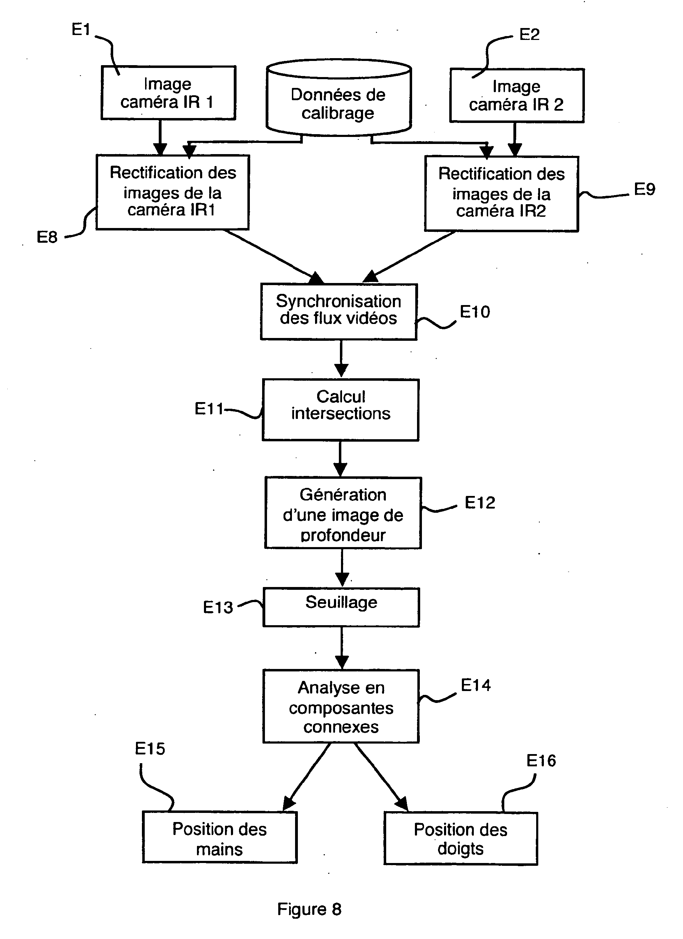

Dans l'étape E4 de traitement des images, les images infrarouges de chaque caméra infrarouge IR1 et IR2 sont, comme l'illustre le diagramme de la figure 8, chacune rectifiées séparément (étapes E8 et E9) pour tenir compte de l'angle de vue des caméras IR1 et IR2. Ainsi, la rectification des images provenant des caméras IR1 et IR2 peut être réalisée par application à chaque pixel d'une matrice de projection 4x4. Le résultat obtenu correspond, pour chaque image rectifiée, à une zone de détection, parallèle au panneau 6, correspondante à l'espace à interaction 3 et pouvant être de taille sensiblement égale à la surface d'affichage qui peut être disposée en regard de l'espace à interaction 3.

La matrice de projection est, de préférence, obtenue par calibrage du dispositif. Une première étape de calibrage consiste à déterminer des zones de détection proches de l'écran, notamment pour définir l'espace à interaction 3. Le calibrage est effectué en disposant contre le panneau transparent 6, en regard de chacun des quatre coins de la surface d'affichage des moyens d'affichage, un émetteur infrarouge de petite taille et en l'activant pour qu'il soit détecté par les caméras infrarouges IR1 et IR2. La position, en deux dimensions (x,y), des signaux correspondant dans les deux images correspondantes est déterminée en binarisant avec une méthode de seuillage connue (de type locale ou globale), les images acquises par les caméras infrarouges IR1 et IR2 lors de l'activation de l'émetteur infrarouge, et en analysant ces images en composantes connexes. Une fois les quatre positions (x,y), correspondants aux quatres coins, obtenues, on détermine par calcul, et pour chaque caméra infrarouge, un volume formant la région de détection (espace à interaction) dans l'infrarouge. Le dispositif ignorera, pour chaque caméra, les données acquises en dehors du volume correspondant.

Les quatre coins sont ensuite utilisés pour calculer la matrice de projection 4x4 permettant de rectifier les images acquises par les caméras infrarouges en fonction de leur position.

Une seconde étape de calibrage consiste à pointer du doigt dans l'espace à interaction 3 une succession de cercles s'affichant sur la surface d'affichage (film 1 ou écran 15) placée derrière le panneau transparent 6. Certains cercles s'affichent dans des zones proches des coins de la surface d'affichage et sont utilisés pour calculer une matrice d'homographie. Les autres cercles sont utilisés pour calculer des paramètres d'une correction quadratique, pouvant être modélisée par un polynôme du second degré en x et y.

Après calibrage, les paramètres des deux matrices de projection (une pour chaque caméra infrarouge) de la matrice d'homographie et du polynôme de correction quadratique sont mis en mémoire dans une base de données de calibrage 19 (figure 8) et sont utilisés pour rectifier les images infrarouges des caméras IR1 et IR2 dans les étapes E8 et E9.

L'avantage de cette méthode de calibration est de permettre le calibrage du dispositif simplement sans connaître la disposition des caméras lors de l'installation du dispositif, par exemple, dans une vitrine tant que l'espace à interaction 3 est couvert à la fois par les caméras IR1 et IR2 et par la source lumineuse 4. Cette calibration permet en outre de passer moins de temps en usine lors de la fabrication du dispositif en s'affranchissant du calibrage. De plus, cette méthode permet de re-calibrer aisément le dispositif installé sur site.

Après rectification des images infrarouges, les différentes images sont synchronisées lors d'une étape de synchronisation des flux vidéos E10. Les images en provenances des différentes caméras infrarouges sont alors assemblées en une seule image, dite composée et la suite du traitement est effectuée sur cette image composée.

L'image composée est ensuite utilisée pour calculer l'intersection du champ de vision des différentes caméras avec une pluralité de plans parallèles au panneau 6 (étape E11) pour former plusieurs couches d'interaction. Pour chaque plan parallèle, une image d'arrière-plan de référence est mise en mémoire quand les différences entre les images courante et précédente de ce plan sont inférieures à un seuil pendant une durée donnée. L'interaction avec les différents plans parallèles est réalisée en calculant la différence avec les images de référence correspondantes.

Une image de profondeur est ensuite générée (étape E12) par reconstruction tridimensionnelle en regroupant les intersections avec les plans obtenus et en appliquant une mise en correspondance stéréoscopique. De préférence, cette étape de génération d'une image de profondeur (E12) utilise l'image en provenance de la caméra périphérique 9 et analyse les régions d'intérêt de cette image en fonction des images précédentes pour éliminer de mauvaises détections dans l'image de profondeur.

L'image de profondeur est ensuite soumise à une étape de seuillage E13 permettant de binariser chaque plan de l'image de profondeur par un seuillage de type global ou local, dépendant des conditions lumineuses pour chaque pixel de l'image ou par détection de mouvements avec un filtre de forme. L'analyse des conditions lumineuses en provenance de l'image acquise par la caméra périphérique 9, pendant son traitement, permet d'ajuster le seuillage et de prendre en compte les variations de lumière au cours de la journée, permettant par la suite une détection optimale des régions d'intérêt.

Enfin, après l'étape de seuillage E13, les plans de l'image de profondeur binarisée sont analysés en composantes connexes (étape E14). De manière connue, une analyse en composantes 4-connexes binaires permet de créer des régions en groupant des pixels ayant des propriétés similaires et permet d'obtenir un ensemble de régions dont la taille est supérieure à un seuil fixé. Plus particulièrement, toutes les régions de tailles supérieures au seuil fixé sont considérées comme représentative des objets (mains, doigts) dont la présence dans l'espace à interaction 3 peut provoquer des modifications de l'affichage, et toutes les régions inférieures à ce seuil sont considérées comme des zones non pertinentes correspondantes, par exemple, à du bruit dans les images. Les régions obtenues sont indexées par leur centre de gravité et leur taille dans les images.

Le résultat de l'étape E14 permet de déterminer s'il s'agit d'une main ou d'un doigt en comparant les régions obtenues à des seuils appropriés. Ainsi, si la taille de la région est supérieure au seuil fixé, la région sera étiquetée comme étant une main (étape E15) et si la taille de la région est inférieure au seuil fixé, la région est étiquetée comme étant un doigt (étape E16). Les seuils correspondent, par exemple, pour une main à la taille moyenne d'une main et pour un doigt à la taille moyenne d'un doigt.

Les coordonnées correspondant à chaque région représentative d'une main ou d'un doigt sont calculées pour chaque caméra infrarouge. Pour calculer la position relative de la région et l'associer à une zone précise de la surface d'affichage, la transformation homographique avec sa correction quadratique est appliquée à partir des coordonnées des régions dans les images précédentes (état du dispositif à l'instant t-1, par exemple). Les étapes E15 et E16 génèrent des événements comportant pour chaque région d'intérêt sa position, sa taille, puis ces évènements sont analysés par le circuit de traitement 5 qui compare la position actuelle avec la position précédente et détermine si une mise à jour de l'affichage doit être effectuée, c'est-à-dire si une action d'un usager a été détectée.

La transformation homographique couplée à la correction quadratique permet de placer les caméras infrarouges IR1 et IR2 sans régler leur angle de vue, le simple calibrage du dispositif étant suffisant. Ceci permet une installation aisée du dispositif.

Grâce au traitement des images infrarouges, le dispositif est capable de distinguer des pointeurs (mains, doigts ou objets) interagissant dans l'espace à interaction 3 avec des zones précises de la surface d'affichage.

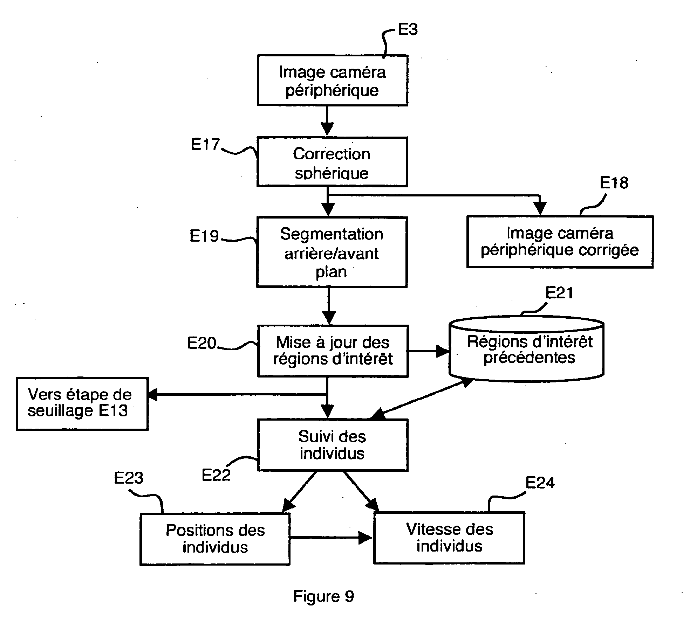

Cependant, le circuit de traitement 5 n'est pas encore capable de déterminer l'appartenance de ces pointeurs à des usagers différents. C'est pourquoi, pour chaque capture d'images infrarouges, une image correspondante dans lé visible est capturée par la caméra périphérique 9, puis traitée parallèlement au traitement des images infrarouges (étape E4). Comme illustré à la figure 9, le traitement de l'image de la caméra périphérique 9 comporte tout d'abord une étape E17 de correction sphérique, notamment lorsque la caméra périphérique comporte une optique grand angle. En effet, le choix d'équiper la caméra périphérique d'une optique grand angle est judicieux car le grand angle permet de couvrir un environnement extérieur plus important. Cependant, ce type d'optique provoque un effet de perspective tendant à faire paraître divers plans d'une même image plus éloignés les uns des autres qu'en réalité, à l'opposé des téléobjectifs qui tendent plutôt à resserrer les sujets dans un seul et même plan. Cette déformation sphérique est, de préférence, rectifiée en modélisant, de manière connue, cette déformation par un polynôme du second degré, qui prend en entrée, pour chaque point de l'image, la distance entre le point courant et le centre de l'image et qui renvoie la distance corrigée entre le centre de l'image et ce point courant. L'image corrigée de la caméra périphérique 9 est ensuite enregistrée dans la mémoire du circuit de traitement 5 (étape E18).

L'image corrigée obtenue lors de l'étape E17 est ensuite utilisée également pour effectuer une étape E19 de segmentation arrière-plan/avant-plan. Cette étape permet de binariser l'image corrigée à l'étape E17 de façon à discriminer l'arrière-plan et l'avant-plan. L'avant-plan correspond à une partie de l'environnement extérieur 7, dans laquelle les éléments détectés correspondent à des usagers ou des passants, tandis que l'arrière-plan est une représentation des objets faisant partie d'une image de fond (immeuble, voiture garée, etc.). Une troisième composante, appelée l'arrière-plan non permanent, correspond à des éléments nouveaux dans le champ de vision de la caméra périphérique 9, mais considérés comme non pertinents (par exemple une voiture qui passe, puis sort du champ de vision). La segmentation permet de déterminer les régions de l'image correspondant à des individus, appelées régions d'intérêt. Ces régions d'intérêt sont, par exemple, représentées sous forme d'ellipses.

À la sortie de l'étape de segmentation E19, si un changement des conditions lumineuses est détecté, le seuillage de type global ou local utilisé dans de l'étape de seuillage E13 est, de préférence, mis à jour.

Le traitement de l'image de la caméra périphérique comporte, après l'étape de segmentation E19, une étape de mise à jour des régions d'intérêt E20. Les coordonnées (centre, taille, orientation) des régions d'intérêt correspondant à des individus dans l'image courante sont mises en mémoire (base de donnée E21). Ainsi en comparant les images précédentes (base de donnée E21) avec l'image courante, il est possible de réaliser le suivi des individus (étape E22).

La détection de nouveaux individus peut être réalisée, dans l'étape E22, en appliquant sur chaque région d'intérêt un filtre de type Kalman d'ordre 0. Par comparaison avec les coordonnées précédentes des régions d'intérêt, le filtre permet de calculer une zone de prédiction des nouvelles coordonnées dans l'image courante.

À partir des données issues du suivi et de la détection des individus, il est possible de déterminer la position E23 puis la vitesse E24 de chaque individu à proximité de l'espace à interaction 3. La vitesse des individus à proximité de l'espace à interaction 3 est obtenue en calculant la différence entre les coordonnées des régions d'intérêt à l'instant courant en fonction des instants précédents. La position des individus à proximité de l'espace à interaction 3 est déterminée par l'intersection d'une zone de prédiction, dépendant, par exemple, des positions précédentes, de la vitesse de déplacement et de l'image binarisée obtenue lors de l'étape E19 de segmentation. Un identifiant unique est associé à chaque région d'intérêt permettant d'effectuer le suivi de cette région précise.

La combinaison des images et des données extraites durant l'étape E4 permet de réaliser les étapes E6 de fusion et E5 d'actimétrie.

Dans l'étape E19 de segmentation arrière/avant-plan chaque pixel de l'image est défini (E25) par ses composantes de couleur. Un élément correspondant à un nuage de points dans un espace de couleur (RGB ou YUV), pour déterminer si un pixel appartient à un élément, les composantes de couleur de ce pixel sont comparées avec celles d'un élément proche, c'est à dire dont la distance minimale avec le pixel est inférieure à un seuil prédéterminé. Les éléments sont ensuite représentés sous forme de cylindre et peuvent être étiquetés de trois façons, par exemple avant-plan, arrière-plan et arrière-plan non permanent.

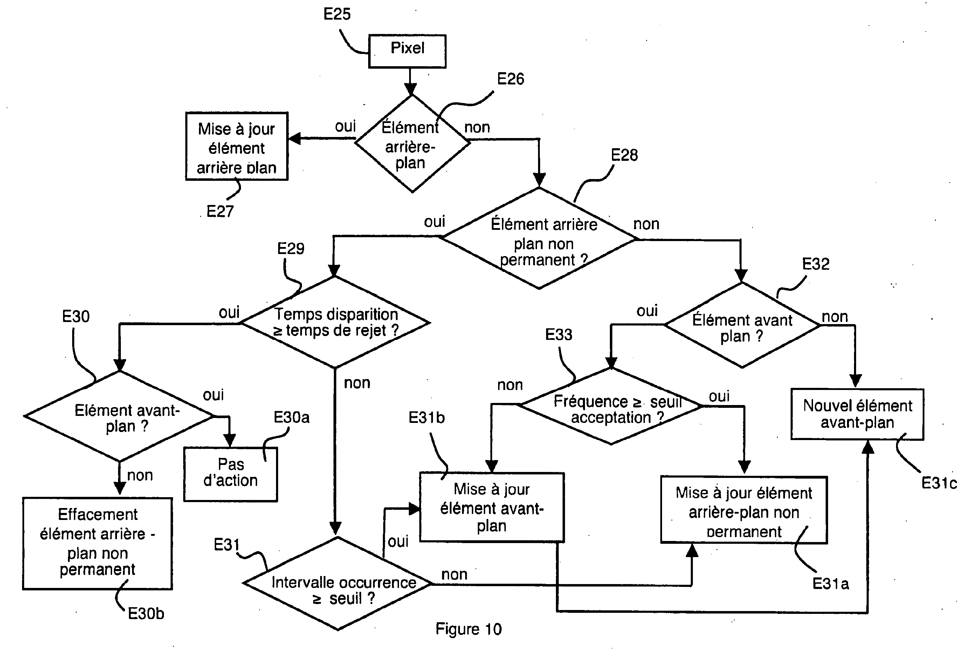

L'algorithme de l'étape de segmentation arrière/avant plan est illustré à la figure 10. Ainsi, pour chaque pixel de l'image corrigée de la caméra périphérique 9, un premier test (étape E26) va interroger une base de données de l'arrière-plan connu afin de déterminer si ce pixel fait ou non partie d'un élément de l'arrière-plan.

Si ce pixel fait partie d'un élément de l'arrière-plan (sortie oui de l'étape E26), alors la base de données comportant les caractéristiques de l'arrière-plan est mise à jour (étape E27). Sinon (sortie non de l'étape E26), le pixel est étudié pour vérifier si ses composantes de couleur sont proches d'un élément appartenant à l'arrière-plan non permanent (étape E28). Si le pixel considéré est un élément de l'arrière-plan non permanent (sortie oui étape E28), alors on teste le temps de disparition de cet élément (étape E29). Si le temps de disparition est supérieur ou égal à un temps de rejet prédéterminé (sortie oui de l'étape E29), alors on teste s'il y a un élément d'avant-plan présent devant l'élément de l'arrière-plan non permanent (étape E30). Si il y a un élément d'avant-plan présent (sortie oui de l'étape E30), alors aucune action n'est effectuée (étape 30a). Sinon (sortie non de E30), dans le cas où aucun élément d'avant-plan n'est présent à la place de l'élément de l'arrière-plan non permanent, alors l'élément de l'arrière-plan non permanent est effacé de l'arrière plan non permanent (étape E30b).

Par contre, si le temps de disparition n'est pas supérieur au temps de rejet (sortie non de l'étape E29), alors on teste si l'intervalle d'occurrence est supérieur à un seuil prédéterminé (étape E31). Un intervalle d'occurrence représente l'intervalle de temps maximum entre deux occurrences d'un élément en fonction du temps lors d'une succession binaire de présence-absence. Ainsi, pour un élément fixe, le passage d'une voiture va causer une disparition de l'objet puis une ré-apparition rapide, et cet élément ne sera, de préférence, pas pris en compte par le dispositif. Selon un autre exemple, une voiture garée depuis un certain temps, puis démarrant, devient un objet mobile, dont l'intervalle d'occurrence devient grand. Un arbre dont les feuilles bougent va générer un petit intervalle d'occurrence, etc.

Si l'intervalle d'occurrence est inférieur à un certain seuil (sortie non de l'étape E31), alors le pixel est considéré comme faisant partie un élément d'arrière-plan non permanent et l'arrière-plan non permanent est mis à jour (étape 31 a) en tenant compte du pixel traité. Sinon (sortie oui de l'étape E31), le pixel est considéré comme faisant partie d'un élément d'avant-plan et l'avant-plan est mis à jour (étape E31 b) en tenant compte du pixel traité. Si l'élément d'avant-plan n'existe pas encore, un nouvel élément d'avant-plan est créé (étape E31 c).

À l'étape E28, si le pixel testé ne fait pas partie de l'arrière-plan non permanent (sortie non de l'étape E28), alors on teste si le pixel fait partie d'un élément de l'avant-plan (étape E32) existant. Si aucun élément d'avant-plan n'existe (sortie non de l'étape E32), alors un nouvel élément d'avant-plan est créé (étape E31 c). Dans le cas où le pixel correspond à un élément d'avant plan existant, (sortie oui de l'étape E32), on teste si la fréquence d'apparition de cet élément est supérieure à un seuil d'acceptation (étape E33). Si la fréquence est supérieure ou égale au temps d'acceptation (sortie oui de l'étape E33), alors le pixel est considéré comme faisant partie d'un élément d'arrière-plan non permanent et l'arrière-plan non permanent est mis à jour (étape E31a). Sinon, la fréquence étant inférieure au seuil d'acceptation (sortie non de l'étape E33), le pixel est considéré comme faisant partie d'un élément d'avant-plan existant et l'avant-plan est mis à jour avec les données de ce pixel (étape E31 b).

Cet algorithme, exécuté par exemple à chaque capture d'image par le circuit de traitement 5, permet au cours du temps de distinguer les différents éléments et les associer au plan leur correspondant. Ainsi, un élément d'arrière-plan non permanent sera tout d'abord considéré comme un élément d'avant-plan, avant d'être considéré comme ce qu'il est réellement, c'est-à-dire un élément d'arrière-plan non permanent, si sa fréquence d'apparition est élevée.

Bien entendu, l'étape de segmentation arrière/avant-plan n'est pas limitée à l'algorithme illustré à la figure 10 mais peut être réalisée par tout type de segmentation arrière/avant-plan connu comme, par exemple , décrit dans le document « Real-time foregroung-background segmentation using codebook model » de Kim et al. publié dans « Real Time Imaging » volume 11, pages 172 à 185 en juin 2005.

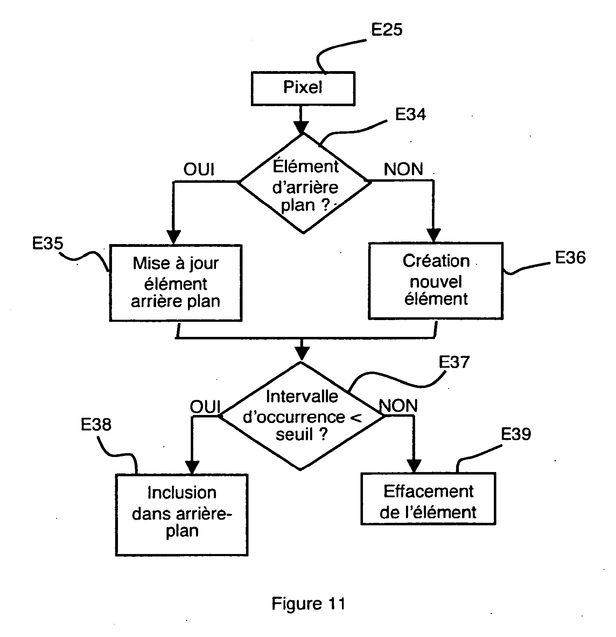

Un processus de segmentation d'avant/arrière plan qualifié d'apprentissage est activé de manière cyclique. Ce processus permet d'une part d'initialiser la reconnaissance effectuée par la caméra périphérique 9, mais aussi de maintenir cohérente la vision de l'environnement extérieur par le circuit de traitement 5. Ainsi, comme illustré à la figure 11, pour chaque pixel apparaissant à l'image capturée par la caméra périphérique, on vérifie si ce pixel fait partie d'un élément de l'arrière-plan (Etape E34). Si le pixel fait partie d'un élément de l'arrière-plan (sortie oui de l'étape E34), alors l'élément de l'arrière-plan correspondant est mis à jour (étape E35). Si le pixel ne fait pas partie d'un élément de l'arrière-plan existant (sortie non de l'étape E34), alors un nouvel élément est créé (étape E36). Ensuite, en fonction de l'étape E35 ou E36, on teste l'intervalle d'occurrence de l'élément associé au pixel (étape E37). Si cet intervalle est inférieur à un certain seuil (sortie oui de l'étape E37), alors l'élément est inclus dans l'image d'arrière-plan (étape E38). Par contre, si l'intervalle est supérieur au seuil (sortie non de l'étape E37), alors l'élément est effacé (étape E39).

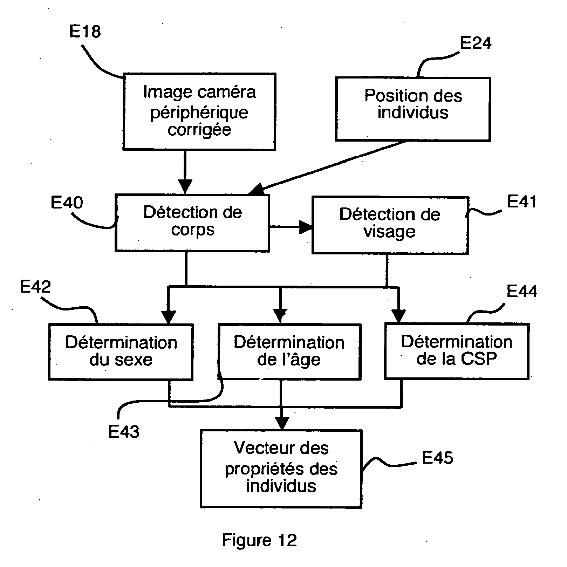

Après la réalisation de l'étape E4 de traitement (figure 7), les images de la caméra périphérique 9 peuvent être utilisées pour déterminer les propriétés associées à un individu. Ainsi, le circuit de traitement 5 peut, en analysant le visage et la morphologie de l'individu, déterminer, au moins approximativement son sexe, son âge et sa catégorie socio-professionnelle afin afficher des données pertinentes adaptées à cet individu. Cette analyse correspond à l'étape E5 d'actimétrie illustrée plus en détail à la figure 12. L'actimétrie utilise l'image corrigée obtenue à de l'étape E18 de la figure 9 et les positions des individus obtenues à l'étape E24 de la figure 9 pour effectuer le calcul des correspondances et détecter le corps des différents individus (étape E40), puis, pour chaque corps, le visage associé à ce corps (étape E41). À partir de l'étude des corps et de leur association à leur visage respectif, le processus d'actimétrie peut, par exemple, déterminer le sexe (étape E42), l'âge (étape E43) et la catégorie socioprofessionnelle (CSP) des individus (étape E44) et créer un vecteur représentatif des propriétés des individus (étape E45) stocké dans la base de données de suivis des individus. En connaissant le vecteur de propriété d'un individu, il est possible d'afficher du contenu ciblé, plus susceptible de l'intéresser.

Ensuite, les zones pertinentes de l'image infrarouge et l'avant-plan peuvent être mises en concordance pour déterminer l'appartenance des doigts et des mains interagissant dans l'espace à interaction 3 et les associer à un usager, puis associer à chaque individu une zone de l'espace à interaction 3 et une zone de la surface d'affichage. Ceci est réalisé pendant l'étape E6 de fusion de la figure 7. Cette étape permet, à partir des données de position de mains (E15), de doigts (E16) d'établir un suivi des mains et des doigts et d'associer ces mains/doigts à un individu identifié par la caméra périphérique (E23). Ainsi, plusieurs individus peuvent interagir dans le même l'espace à interaction 3, et les mouvements de leurs mains/doigts peuvent être traités par le circuit de traitement 5. Le suivi des mouvements des mains et/ou doigts permet de déterminer ce que fait l'usager dans l'espace à interaction 3, par exemple vers quelle zone il pointe un objet du doigt, et lui fournir des données associées à ce qu'il regarde sur l'affichage. L'association de mains, doigts ou objet à un usager peut être réalisée par mesure, à chaque nouvelle images, des coordonnées des mains/doigts/objets, chaque main, doigt, objet étant ensuite associé à l'usager dont les coordonnées sont les plus proches des coordonnées mesurées des mains/doigts/objets présents dans l'espace à interaction 3.

Les images acquises par la caméra périphérique 9 peuvent être étalonnées en disposant, de manière connue, une mire de calibrage dans le champ de vision de la caméra périphérique 9. Ce calibrage permet pour chaque image acquise de connaître la position précise (distance, coordonnées spatiales, etc.) des individus par rapport à l'espace à interaction 3.

L'étape E7 de proximité de la figure 7 permet de distinguer chaque individu détecté en le classant dans la catégorie usager ou passant (étape E46) en fonction de sa distance par rapport à l'espace à interaction 3. Si la distance entre l'individu et l'espace à interaction 3 ou le panneau 6 est inférieure à un certain seuil, alors l'individu est considéré comme un usager, sinon comme un passant. Ensuite on teste la présence d'usagers (étape E47). Si aucun usager n'est présent (sortie non de l'étape E47), alors cela génère un événement disparition d'usager, qui est traité par le circuit de traitement 5. Si un nouvel usager est détecté (sortie oui de l'étape E47), ses coordonnées sont mémorisées. Simultanément, on teste la présence de passants (étape E48). Si aucun passant n'est présent (sortie non de l'étape E48), alors cela génère un événement disparition de passant, qui est traité par le circuit de traitement 5. Si un nouveau passant est détecté (sortie oui de l'étape E48), le circuit de traitement 5 mémorise les coordonnées de ce passant.

La détection d'un nouvel usager ou d'un nouveau passant provoque la mise à jour (étape E49) d'un indice de proximité (coordonnées et instant d'apparition) par le circuit de traitement 5. L'analyse de cet indice permet de déterminer si un passant ou un usager s'éloigne ou se rapproche en fonction de sa position précédente.

Le dispositif interactif surveille en permanence ce qui se passe dans l'environnement extérieur et peut réagir quasiment instantanément lorsque des évènements (apparition, disparition, déplacement d'un individu, mouvement des mains ou doigts) sont générés.

La dissociation arrière-plan et arrière-plan non permanent faite par l'étape de segmentation permet de différentier une voiture passant dans le champ de vision de la caméra périphérique de mouvements répétés avec un petit intervalle de temps, tel que les feuilles d'un arbre en mouvements à cause du vent.

## Revendications

1. Dispositif interactif comportant :
- un panneau transparent (6) délimitant, d'une part, un espace à interaction (3) inclus dans un environnement extérieur (7) et, d'autre part, un espace interne (8),
- des moyens de capture d'image disposés dans l'espace interne (8), et comportant au moins deux caméras (IR1, IR2) infrarouges couvrant ledit espace à interaction (3) et une caméra périphérique (9) de capture dans le visible d'images représentatives de l'environnement extérieur (7),
- une source lumineuse (4) émettant dans l'infrarouge proche disposée dans l'espace interne (8) et agencée pour éclairer l'espace à interaction (3), le dispositif étant **caractérisé en ce qu'**il comporte :
- une face inclinée (13), munie de moyens de réflexion, montée sur une face externe du panneau (6) et orientée à la fois vers le panneau (6) et vers l'espace à interaction (3),
- la source lumineuse (4) et/ou les caméras infrarouges (IR1, IR2) montées sur une face interne du panneau (6) et orientées vers la face inclinée (13).

2. Dispositif selon la revendication 1, **caractérisé en ce qu'**il comporte un élément de support portant la source lumineuse (4) et/ou les caméras infrarouges (IR1, IR2), et un élément complémentaire (11) se présentant sous la forme d'une barre complémentaire comportant la face inclinée (13).

3. Dispositif selon la revendication 2, **caractérisé en ce que** l'élément de support (10) portant la source lumineuse et/ou les caméras infrarouges (IR1, IR2) est une barre de support plaquée contre le panneau transparent (6).

4. Dispositif selon l'une quelconque des revendications 2 à 3, **caractérisé en ce que** la barre complémentaire est mise en place sur la face extérieure du panneau (6).

5. Dispositif selon les revendications 2 et 3, **caractérisé en ce que** les barres comportent chacune des aimants complémentaires permettant de prendre en sandwich le panneau transparent (6).

6. Dispositif selon l'une quelconque des revendications précédentes, **caractérisé en ce qu'**il comporte des moyens d'affichage disposés dans l'espace interne (8), un circuit de traitement (5) étant connecté aux moyens d'affichages (1, 2 ; 15) et aux moyens de capture.

7. Dispositif selon la revendication 6, **caractérisé en ce que** les moyens d'affichage comportent un film diffusant et transparent (1), disposé dans l'espace interne (8), à proximité immédiate du panneau transparent (6), et un vidéoprojecteur (2) disposé dans l'espace interne (8) et orienté vers le film transparent (1).

8. Dispositif selon la revendication 7, **caractérisé en ce que** le vidéoprojecteur (2) est équipé d'un filtre coupe-bande dans l'infrarouge.

9. Dispositif selon la revendication 6, **caractérisé en ce que** les moyens d'affichage comportent un écran (15) opaque.

10. Procédé d'utilisation du dispositif selon l'une quelconque des revendications 1 à 9, **caractérisé en ce qu'**il comporte un cycle répétitif comportant successivement :
- une étape d'acquisition d'images (E1, E2, E3) infrarouges par les caméras infrarouges (IR1, IR2) et d'images dans le visible par la caméra périphérique (9),
- le traitements des images acquises,
- la fusion des images infrarouges et visibles pour générer une image représentative de l'environnement extérieur (7),
- le suivi d'individus situés dans l'environnement extérieur.

11. Procédé selon la revendication 10, **caractérisé en ce que**, le dispositif comportant des moyens d'affichage, une étape de modification de l'affichage en fonction des mouvements des individus au niveau de l'espace à interaction (3) est réalisée après l'étape de suivi des individus.

12. Procédé selon l'une des revendications 10 et 11, **caractérisé en ce que**, l'environnement extérieur étant divisé en plusieurs sous-volumes, un circuit de traitement (5) distingue les individus en fonction de leur positionnement dans les différents sous-volumes et modifie l'affichage en conséquence.

13. Procédé selon l'une quelconque des revendications 10 à 12, **caractérisé en ce qu'**il comporte, après l'étape de traitement des images, une étape d'actimétrie réalisée sur une image corrigée de la caméra périphérique.

14. Procédé selon l'une quelconque des revendications 10 à 13, **caractérisé en ce que** l'étape de traitement des images réalise une segmentation avant-plan/arrière-plan à partir des images de la caméra périphérique (9).

15. Procédé selon l'une quelconque des revendications 10 à 14, **caractérisé en ce que** l'étape de fusion comporte l'association de mains, doigts ou objet détectés par les caméras infrarouges IR1 et IR2, dans l'espace à interaction (3), à un usager correspondant détecté par la caméra périphérique (9) dans l'environnement extérieur (7).

## Claims

1. An interactive device comprising:
- a transparent panel (6) delineating an interaction space (3) included in an external environment (7) on the one hand and an internal space (8) on the other hand,
- image capture means arranged in the internal space (8) and comprising at least two infrared cameras (IR1, IR2) covering said interaction space (3) and a peripheral camera (9) for capture in the visible range of images representative of the external environment (7),
- a light source (4) emitting in the near-infrared range arranged in the internal space (8) and arranged to illuminate the interaction space (3),
the device being **characterized in that** it comprises:
- an inclined surface (13), provided with reflecting means, mounted on an external surface of the panel (6) and directed both towards the panel (6) and towards the interaction space (3),
- the light source (4) and/or infrared cameras (IR1, IR2) mounted on an internal surface of the panel (6) and directed towards the inclined surface (13).

2. The device according to claim 1 **characterized in that** it comprises a support element (10) supporting the light source (4) and/or the infrared cameras (IR1, IR2), and a complementary element (11) in the form of a complementary bar comprising the inclined surface (13).

3. The device according to claim 2, **characterized in that** the support element (10) acting as support for the light source and/or the infrared cameras (IR1, IR2) is a support bar pressing against the transparent panel (6).

4. The device according to one of claims 2 or 3, **characterized in that** the complementary bar is fitted on the external surface of the panel (6).

5. The device according to claims 2 and 3, **characterized in that** the bars each comprise complementary magnets sandwiching the transparent panel (6).

6. The device according to any one of the foregoing claims, **characterized in that** it comprises display means arranged in the internal space (8), a processing circuit (5) being connected to the display means (1, 2 ; 15) and to the capture means.

7. The device according to claim 6, **characterized in that** the display means comprise a diffusing and transparent film (1), arranged in the internal space (8), in immediate proximity to the transparent panel (6), and a video projector (2) arranged in the internal space (8) and directed towards the transparent film (1).

8. The device according to claim 7, **characterized in that** the video projector (2) is equipped with a band-stop filter in the infrared.

9. The device according to claim 6, **characterized in that** the display means comprise an opaque screen (15).

10. A method for using the device according to any one of claims 1 to 9, **characterized in that** it comprises a repetitive cycle successively comprising:
- an acquisition step of infrared images (E1, E2, E3) by the infrared cameras (IR1, IR2) and of images in the visible range by the peripheral camera (9),
- processing of the acquired images,
- merging of the infrared and visible images to generate an image representative of the external environment (7),
- tracking of individuals situated in the external environment.

11. The method according to claim 10, **characterized in that**, the device comprising display means, a modification step of the display according to the movements of the individuals at the level of the interaction space (3) is performed after the tracking step of the individuals.

12. The method according to one of claims 10 and 11, **characterized in that**, the external environment being divided into several sub-volumes, a processing circuit (5) distinguishes the individuals according to their positioning in the different sub-volumes and modifies the display accordingly.

13. The method according to any one of claims 10 to 12, **characterized in that**, after the image processing step, it comprises an actimetry step performed on a corrected image of the peripheral camera.

14. The method according to any one of claims 10 to 13, **characterized in that** the image processing step performs a foreground/background segmentation from the images of the peripheral camera (9).

15. The method according to any one of claims 10 to 14, **characterized in that** the merging step comprises association of hands, fingers or objects detected by the infrared cameras (IR1 and IR2), in the interaction space (3), with a corresponding user detected by the peripheral camera (9) in the external environment (7).

## Patentansprüche

1. Interaktive Vorrichtung, die umfasst:
- eine durchsichtige Scheibe (6), die einerseits einen Interaktionsraum (3), der von einer äußeren Umgebung (7) umschlossen ist, und andererseits einen Innenraum (8) begrenzt,
- Mittel zur Bilderfassung, die in dem Innenraum (8) angeordnet sind und mindestens zwei Infrarotkameras (IR1, IR2) umfassen, die den genannten Interaktionsraum (3) abdecken, und eine Umfangskamera (9) zur Erfassung von Bildern im Sichtbaren, die die äußere Umgebung (7) wiedergeben,
- eine Lichtquelle (4), die in den nahen Infrarot ausstrahlt und in dem Innenraum (8) vorgesehen und so angeordnet ist, das sie den Interaktionsraum (3) ausleuchtet, wobei die Vorrichtung **dadurch gekennzeichnet ist, dass** sie umfasst:
- eine abgewinkelte Fläche (13), die mit Reflexionsmitteln ausgestattet ist und an einer Außenseite der Scheibe (6) montiert und sowohl zur Scheibe (6) als auch zum Interaktionsraum (3) hin ausgerichtet ist,
- wobei die Lichtquelle (4) und/oder die Infrarotkameras (IR1, IR2) an einer Innenseite der Scheibe (6) montiert ist/sind und zur abgewinkelten Fläche (13) hin ausgerichtet sind.

2. Vorrichtung nach Anspruch 1, **dadurch gekennzeichnet, dass** sie ein Halterungselement umfasst, das die Lichtquelle (4) und/oder die Infrarotkameras (IR1, IR2) trägt, sowie ein komplementäres Element (11), das in Form einer komplementären Stange vorgesehen ist, die die abgewinkelte Fläche (13) umfasst.

3. Vorrichtung nach Anspruch 2, **dadurch gekennzeichnet, dass** das Halterungselement (10), das die Lichtquelle und/oder die Infrarotkameras (IR1, IR2) trägt, eine Tragstange ist, die fest an die transparente Scheibe (6) gepresst ist.

4. Vorrichtung nach einem der Ansprüche 2 bis 3, **dadurch gekennzeichnet, dass** die komplementäre Stange an der Außenseite der Scheibe (6) angebracht ist.

5. Vorrichtung nach den Ansprüchen 2 und 3, **dadurch gekennzeichnet, dass** die Stangen jeweils komplementäre Magneten umfassen, die das Einfassen der transparenten Scheibe (6) nach Art eines Sandwichs ermöglichen.

6. Vorrichtung nach einem der vorstehenden Ansprüche, **dadurch gekennzeichnet, dass** sie Anzeigemittel umfasst, die in dem Innenraum (8) vorgesehen sind, wobei eine Verarbeitungsschaltung (5) an die Anzeigemittel (1, 2; 15) und die Erfassungsmittel geschaltet ist.

7. Vorrichtung nach Anspruch 6, **dadurch gekennzeichnet, dass** die Anzeigemittel eine diffundierende und transparente Folie (1) umfassen, die in dem Innenraum (8) in unmittelbarer Nähe der transparenten Scheibe (6) angeordnet ist, sowie einen Videoprojektor (2), der in dem Innenraum (8) angeordnet und zur transparenten Folie (1) hin ausgerichtet ist.

8. Vorrichtung nach Anspruch 7, **dadurch gekennzeichnet, dass** der Videoprojektor (2) mit einem Bandsperrefilter im Infrarot versehen ist.

9. Vorrichtung nach Anspruch 6, **dadurch gekennzeichnet, dass** die Anzeigemittel einen optisch dichten Bildschirm (15) umfassen.

10. Verfahren zur Verwendung der Vorrichtung nach einem der Ansprüche 1 bis 9, **dadurch gekennzeichnet, dass** es einen sich wiederholenden Zyklus umfasst, der nacheinander umfasst:
- einen Schritt zur Erfassung von Infrarotbildern (E1, E2, E3) durch die Infrarotkameras (IR1, IR2) und Bildern im sichtbaren Bereich durch die Umfangskamera (9),
- die Verarbeitung der erfassten Bilder,
- die Zusammenführung der Infrarot- und der sichtbaren Bilder, um ein Bild herzustellen, das die äußere Umgebung wiedergibt (7),
- das Verfolgen von Bewegungen von Personen, die sich in der äußeren Umgebung befinden.

11. Verfahren nach Anspruch 10, **dadurch gekennzeichnet, dass**, nachdem die Vorrichtung Mittel zum Anzeigen umfasst, nach dem Schritt des Verfolgens der Bewegungen der Personen ein Schritt der Änderung der Anzeige abhängig von den Bewegungen der Personen im Bereich des Interaktionsbereichs erfolgt.

12. Verfahren nach einem der Ansprüche 10 und 11, **dadurch gekennzeichnet, dass**, nachdem die äußere Umgebung in mehrere Einzelräume unterteilt ist, eine Verarbeitungsschaltung (5) die Personen abhängig von ihrer Positionierung in den unterschiedlichen Einzelräumen unterscheidet und die Anzeige entsprechend ändert.

13. Verfahren nach einem der Ansprüche 10 bis 12, **dadurch gekennzeichnet, dass** es nach dem Bildverarbeitungsschritt einen Aktimetrieschritt an einem korrigierten Bild der Umfangskamera umfasst.

14. Verfahren nach einem der Ansprüche 10 bis 13, **dadurch gekennzeichnet, dass** im Bildverarbeitungsschritt eine Segmentierung von Vorder-/Hintergrund ausgehend von den Bildern der Umfangskamera (9) erfolgt.

15. Verfahren nach einem der Ansprüche 10 bis 14, **dadurch gekennzeichnet, dass** der Zusammenführungsschritt die Zuordnung von Händen, Fingern oder anderen von den Infrarotkameras IR1 und IR2 erfassten Gegenständen in dem Interaktionsraum (3) zu einem entsprechenden Benutzer umfasst, der von der Umfangskamera (9) in der äußeren Umgebung (7) erfasst wurde.
